# EUROPEAN PATENT APPLICATION

(11) **EP 2 322 840 A1**
(43) Date of publication of application: **18.05.2011**
(21) Application number: 08875579.8
(22) Date of filing: 11.08.2008
(51) Int. Cl.: F16M 11/12, F16M 13/02

(54) **ADJUSTABLE HOLDER**

(71) Applicant: Woxter Technology Co. Limited, Hong Kong (CN)
(72) Inventor: PARRAGA GIMENO, Javier, E-28013 Madrid (ES)
(74) Representative: Carvajal y Urquijo, Isabel
(86) International application number: PCT/ES2008/000561
(87) International publication number: WO 2010/018241

(57) **Abstract**

The subject of this invention is an adjustable support which enables any element to be positioned mainly those concerned with visual communications, preferably having a flat form (plasma screen, LCD, TFT, poster, advertisement etc.) at any angle and in any position with respect to the initial plane with the normal vector to the screen covering a wide three dimensional angular range (stereoradian). Due to its special configuration the adjustable support formed by at least three rods which are adjustable in length, permits the one way definition of a plane on which a supported visual element is placed, a plane which may form a solid angle such that it permits optimum viewing from any position of the user since the normal vector to the screen may be made to coincide with the visual line of the user.

## Description

### OBJECT OF THE INVENTION

The subject of this invention is an adjustable support which enables any element to be positioned, principally those concerned with visual communications, preferably with a flat form (plasma screen, LCD, TFT, poster, advertisement etc.) at any angle and in any position with respect to the initial plane with the normal vector to the screen covering a wide three dimensional angular range (stereoradian).

Due to its special configuration, the adjustable support formed by at least three length adjustable rods permits the one way definition of a plane on which a supported visual element is placed, a plane which may form a solid angle such that it permits optimum viewing from any position of the user, since the normal vector to the screen may be made to coincide with the visual line of the user.

Furthermore, it is easily automated by means of a control unit which can activate the adjustable rods of the universal support, modifying their length in such a way that the screen can be coupled to the aforementioned plane and can move at any time to any position or orienttation that the user desires, by means of a remote control which sends a signal to the control unit obtaining an optimum view of the screen.

### BACKGROUND TO THE INVENTION

Supports for visualising elements (screens) are well known in the state of the art, permitting rotation of the viewing element in an angular range round the sole vertical axis which controls oscillation of the support, and as a result of the screen element in a horizontal direction.

However, the previous supports do not have the capacity to rotate round the horizontal axis which permits the viewing device to be bent backwards and forwards, regulating the inclination of the viewing device according to the user's wishes.

In addition, in the case of supports with both rotations, the various positions which the support may present are limited, as firstly it is necessary to rotate round one of the axes, and then proceed to turn round the other axis, thus the step from the initial position to the final position is made with simple turns which do not cover all the possible position in the area which the support may present, and which wold permit the user to have an unlimited number of positions which could be adjusted to its position at any given moment.

The supports described also need to be fixed manually in a vertical or horizontal axis in order to start the rotation in the other, due to design restrictions. They are voluminous, heavy, with restricted positioning and generally manually operated (difficult to automate).

This invention resolves all the aforementioned problems as it consists of an adjustable support with more degrees of freedom in positioning the screen which enables viewing in a wide three dimensional angular range with an unlimited numbed of positions in this range.

### DESCRIPTION OF THE INVENTION

The present invention refers to a universal adjustable support which permits positioning of any element within a wide three dimensional angular range.

The support is formed by at least three length adjustable rods which are joined to a frame by means of a simple articulation, so that each one turns with respect to the frame, following a fixed plane rotating round a single axis. The movement of each rod with respect to the frame is according to a plane which in a preferred embodiment shall be perpendicular to the frame.

The other ends of length adjustable rods are joined to the element to be supported by means of connections of the spherical ball type, or their equivalent, that is without restricting the degrees of freedom associated with rotation. The three connection points in the spherical ball define a one way viewing plane according to the length of each of the rods.

Due to the simple articulation of connection to the frame of each rod and to the extensible length of the same, the resulting mobile viewing plane rotates freely in the space in contrast to the previous solutions on the market.

In the event that there are more than three rods in the support, the position of each further additional rod shall be conditioned by the position of the other three, without this in any way impeding the position of the element to be supported in a wide three dimensional angular range with an unlimited number of positions within that range.

In a mode of execution which incorporates one or more additional rods, these shall be provided at their ends with connections of the spherical ball type, or their equivalent, without restrictions on rotation as the orientation is established by the three main rods. The spherical ball connections may be provided with attachment means which, having established the final orientation of the viewing plane, ensure and increase the resistance of the support.

The operating principle is universal as it permits application to a whole range of flat screens or other similar visual communications elements which are currently manufactured, irrespective of their size.

It is desirable for the element attached to the screen or mobile base to comply with international VESA standard dimensions in respect of the distance dimensions between the attachment screws of the back part of the screens, permitting optional use of an additional universal plate for mounting between the mobile base and the screen.

To summarise, the invention refers to an adjustable support which permits optimum viewing, as it is mobile and articulated, of any screen or viewing element characterised in that each one of the three rods is joined at one end to the frame and at the other end to the element to be supported, either directly or by means of an intermediate frame; each one of the rods is provided at one end with a simple articulation with rotation capacity in respect of an axis and, at the other end, it is joined to an articulation of the spherical ball type so that by regulating the length thereof a one way position is achieved, on the same plane, for the connection ends of the length adjustable rods (1) to the element which they support.

The invention established in claim 1 is considered to be included by reference as well as any of the specific modes of embodiment established by dependent claims 2 to 13.

The supports obtained according to the invention are compact and, when folded, take up little space, are light and can provide unlimited positions as well as having the possibility of being automated so that they can be remotely controlled by the user using a remote control device.

### DESCRIPTION OF THE DRAWINGS

The present descriptive report is complemented by a set of plans illustrating a preferred embodiment of the invention but which is in no way restrictive.

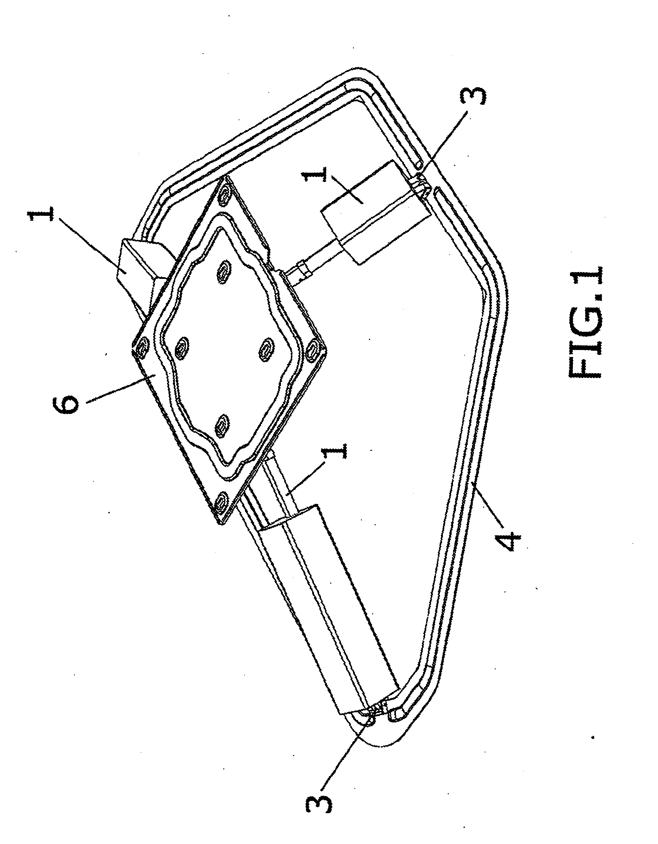

Figure 1 snows a perspective view of the adjustable support according to an example of an embodiment of the invention.

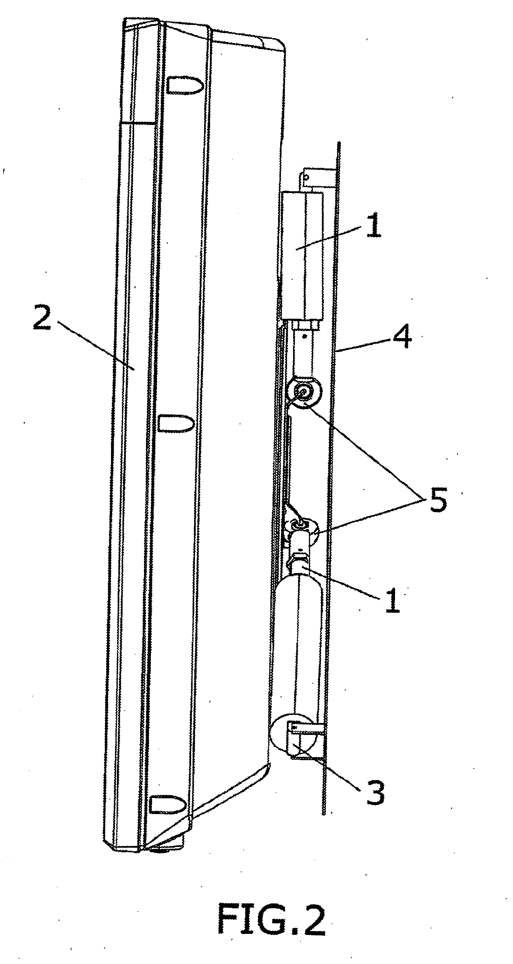

Figure 2 shows a lateral view of the adjustable support according to the same example of an embodiment together with the element supported when it is placed against the support, or in an initial position prior to being adjusted.
Figure 3 shows a lateral perspective view of the adjustable support according to the same example of an embodiment, together with the element supported when it is extended in respect of the support or in a position of use.
Figure 4 shows the support according to the same example of an embodiment to which is incorporated, by way of a diagram, a representation of a solid angle measurable in stereo radians as well as an arrow showing the normal direction of the viewing plane.

### PREFERRED EMBODIMENT OF THE INVENTION

In the light of the foregoing, this invention refers to an adjustable support for an element, which in this example of a preferred embodiment is a viewing device which permits positioning of the element in a three dimensional angular range of ±2π/9 stereoradians. In the light of the foregoing, this invention refers to an adjustable support for an element, which in this example of a preferred embodiment is a viewing device which permits positioning of the element in a three dimensional angular range of ±2π/9 stereoradians.

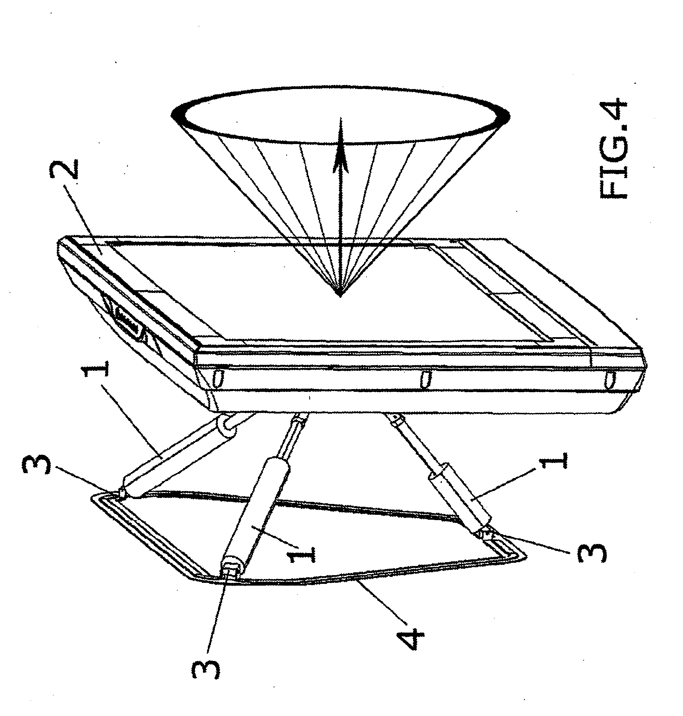

The graphic representation of figure 4 shows the normal vector to the viewing plan which is oriented with the support according to the invention with respect to the fixed plan which in the example of an embodiment shall consist of a frame (4).

The adjustable support comprises three length adjustable rods (1), which are provided at the end opposite to the end connecting to the viewing element (2) or device, with a simple articulation (3) for connection of the support to a frame (4).

The length adjustable rods (1) are joined by their other end to- the element (2) or viewing device defining in a one way manner on a same plane, the position of said connection ends of the length adjustable rods (1) to the support element, and therefore of the viewing element or device (2).

The connection of the length adjustable rods (1) to the viewing element or device (2) is made by means of a spherical ball (5) situating between the length adjustable rods (1) and the viewing element or device (2), a frame (6) on which the supported element is fixed.

The one way positioning is established because the distance between the three ends of the rods (1) which are provided with a spherical ball (5) connection is fixed, as it is solid to the object to be supported or to a rigid intermediate structure: which in this example has been termed embodiment frame (6)

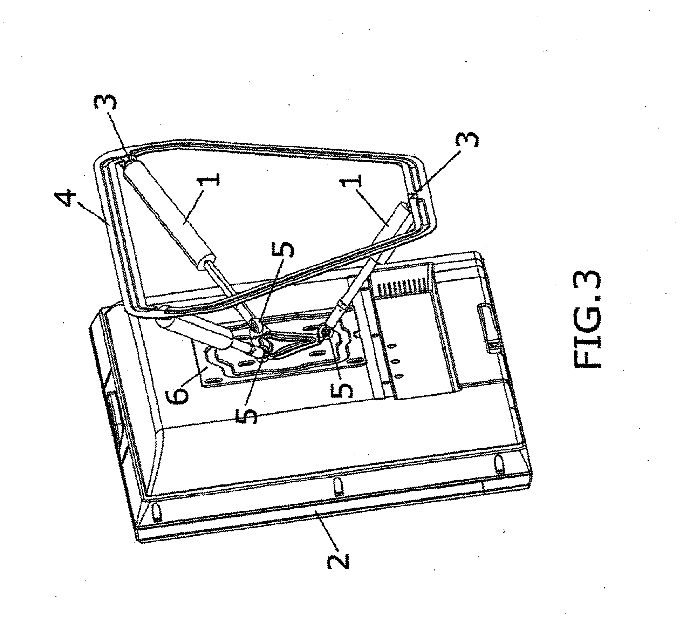

In this example of an embodiment, the simple articulations (3) of the three length adjustable rods (1) define the vertices of an isosceles triangle, with two of these simple articulations (3) placed on the same horizontal plane (reference according to the representation in figure 3 where the device is fixed to a wall) above the point where the third of the simple articulations (3) is placed.

In this way, the plane defined in one way by the connection ends of the length adjustable rods (1) to the viewing element or device (2), is provided in the example show and with respect to the frame (4), with a solid angle included in the range of ±2π/9 stereoradians.

The position of the length adjustable rods (1) is controlled by a control unit (not shown) through an infrared transmitted signal from a control device (not shown) to the control unit,

The length adjustable rods (1) may be hydraulic cylinders which are activated by a hydraulic pump controlled by the control unit, or by threaded screws which are activated by servomotors which are in turn activated by a control unit.

The essential nature of this invention is not altered by any variations in materials, form, size and arrangement of its component elements, which are described in a non-restrictive manner, with this being sufficient to proceed to its reproduction by an expert.

## Claims

1. - Adjustable support **characterised in that** it comprises a frame (4) and at least three length adjustable rods (1) where each of the three rods (1) is joined at one end to a frame (4) and at the other end to the element (2) to be supported, either directly or by means of an intermediate frame (6); each of the rods (1) is provided at one end with a simple articulation (3) able to rotate with respect to an axis and, at the other end, an articulation (5) of the spherical ball type, so that by regulating their length (1) a one way position is achieved, on a same plane, for the connection, ends of the length adjustable rods (1) linked to the element (2)they support.

2. - Adjustable support according to claim 1 **characterised in that** the simple articulation (3) with rotational capacity with respect to an axis is situated as a means of connection between the frame (4) and the rods (1) with the end being linked to the element (2) they support which is provided as a means of connection a connection consisting of spherical balls.

3. - Adjustable support according to claims 1 or 2 **characterised in that** the simple articulations (3) of the three length adjustable rods define the vertices of an isosceles triangle, with two of these (3) being on the same horizontal plane.

4. - Adjustable support according to claim 3 **characterised in that** the horizontal plane on which two of the simple articulations (3) are placed is above the point where the third of the simple articulations (3) is placed.

5. - Adjustable support according to claim 1 **characterised in that** the one way plane defined by the ends of the rods (1) connecting to the element (2) which they support, is provided with respect to the frame (4) a solid angle included in the range of ±2π/9 stereoradians.

6. Adjustable support according to claim 1 **characterised in that** there is additionally one or more length adjustable rods (1) joined by one end to the frame (4) and at the other end to the element (2) to be supported, or either directly or by means of an intermediate frame (6); where the two means of connection are carried out by means of connections of the spherical ball type.

7. - Adjustable support according to claim 6 **characterised in that** the spherical ball connections may be affixed once the specific orientation of the support has been established.

8. - Adjustable support according to claim 1 **characterised in that** a control unit controls the extension of the length adjustable rods (1).

9. - Adjustable support according to claim 8 **characterised in that** in order to activate the length adjustable rods (1) a signal is sent from a remote control unit.

10. - Adjustable support according to claim 9 **characterised in that** the signal is sent by infrared or radio frequency means.

11. - Adjustable support according to claim 8 **characterised in that** the length adjustable rods (1) are hydraulic cylinders which are activated by a hydraulic pump controlled by a control unit.

12. - Adjustable support according to claim 8 **characterised in that** the length adjustable rods (1) are threaded screws which are activated by servomotors controller by a control unit.

13. - Adjustable support according to the previous claims **characterised in that** the supported element is a viewing device.
